(19) Europäisches Patentamt
European Patent Office
Office européen des brevets

(11) Veröffentlichungsnummer: 0 097 990
A1

# (12) EUROPÄISCHE PATENTANMELDUNG

(21) Anmeldenummer: 83200875.9

(22) Anmeldetag: 15.06.83

(51) Int. Cl.³: A 01 N 37/22
A 01 N 37/18
//(A01N37/22, 33/22, 37/18, 33/22)

(30) Priorität: 19.06.82 DE 3223013

(43) Veröffentlichungstag der Anmeldung: 11.01.84 Patentblatt 84/2

(84) Benannte Vertragsstaaten: AT BE CH DE FR GB IT LI LU NL SE

(71) Anmelder: NORDDEUTSCHE AFFINERIE AG
Alsterterrasse 2
D-2000 Hamburg 36(DE)

(72) Erfinder: Ploss, Hartmut, Dr.
Sierichstrasse 88
D-2000 Hamburg 60(DE)

(72) Erfinder: Maierhofer, Franz
Sebastian-Kneipp-Strasse 14
D-2210 Itzehoe(DE)

(74) Vertreter: Fischer, Ernst, Dr.
Reuterweg 14
D-6000 Frankfurt am Main 1(DE)

## (54) Mittel zur selektiven Unkrautbekämpfung.

(57) Bei einem Mittel zur Unkrautbekämpfung auf Basis einer Wirkstoffkombination aus Carbonsäureamid und Phenoläther wird zur Erhöhung der Selektivität eine Kombination aus

Carbonsäureamid (A) der allgemeinen Formel

$R_1R_2CH-CO-NR_3R_4$

worin $R_1$ bis $R_4$ jeweils ein ggf. substituierter Phenylrest oder Alkylrest mit 1 bis 4 C-Atomen ist, und

Diphenyläther (B) der allgemeinen Formel

$R_2R_3R_4C_6H_2-O-C_6H_3NO_2R_1$

worin

$R_1$ = Wasserstoff, Acetyl, $C_{1\ bis\ 4}$ - Alkoxy
$R_2$ = Halogen, $NO_2$
$R_3$ = Halogen, $CF_3$
$R_4$ = Wasserstoff, Halogen,
wobei im Falle von $R_2$ und $R_3$ = Halogen $R_4$ kein Wasserstoff ist, vorgesehen.

In einer besonderen Ausführungsform ist das Carbonsäureamid Diphenamid und der Diphenyläther Oxyfluorfen.

EP 0 097 990 A1

Croydon Printing Company Ltd

0097990

NORDDEUTSCHE AFFINERIE
Aktiengesellschaft
Alsterterrasse 2
2000 Hamburg 36

18. Juni 1982
DRML/755/HFA

Prov. Nr. 8880 NA

# Mittel zur selektiven Unkrautbekämpfung

Die Erfindung betrifft ein Mittel zur selektiven Unkrautbekämpfung auf Basis einer Wirkstoffkombination aus Carbonsäureamid und Phenoläther.

Es ist bekannt, Carbonsäureamid, wie N, N-Dimethyl-2,2-diphenylacetamid, zur selektiven Unkrautbekämpfung in Nutzpflanzenkulturen von z. B. Kartoffeln, Baumwolle, Sojabohnen, Gemüse, sowie bei Zierpflanzen u. a. als Vorauflaufherbizid einzusetzen (US-PS 3120434). Nachteilig hierbei ist jedoch, daß neben der guten Erfassung der Ungräser eine Anzahl wichtiger Unkräuter nicht erfaßt bzw. nur zu einem geringen Teil erfaßt werden. Ein weiterer Nachteil besteht darin, daß die Mittel nur auf vollkommen unkrautfreien und speziell vorbehandelten, d. h. feinkrümeligen Böden aufgebracht bzw. flach eingearbeitet werden dürfen.

Nach weiteren bekannten Vorschlägen hat man auch schon Wirkstoffkombinationen aus Carbonsäureamid und Phenoläther vorgeschlagen, wie Kombinationen aus N, N-Dimethyl-2,2-diphenylacetamid (Diphenamid) und 3-[4-(4-Chlorphenoxy-)-phenyl]-1,1-dimethylharnstoff (Chloroxuron) (Chem. Abstr. Vol. 76, 1972, Ref. 109107 k), sowie Kombinationen aus einem Carbonsäureamid und einem weiteren Herbizid, wie

Kombinationen aus N,N-Dimethyl-2,2- diphenylacetamid(Diphenamid) und α,α,α- Trifluor-2,6-dinitro-N,N-dipropyl-p-toluidin (Trifluralin) oder Kombinationen aus Diphenamid und 4-Methylsulfonyl-2,6-dimitro-N,N-dipropylanilin (Nitralin) (Chem. Abstr. Vol. 83, 1975, Ref. 38686e).

Auch derartige Kombinationen haben nicht in allen Fällen befriedigende Wirkungen gezeitigt.

Es ist daher Aufgabe der Erfindung, ein Mittel zur selektiven Unkrautbekämpfung bereitzustellen, das die erwähnten Nachteile nicht aufweist und sich für die wirksamere Bekämpfung von Unkräutern eignet und somit auch eine entsprechende Anwendung in älteren Ziergehölzanlagen und Anlagen mit vorhandenen Unkräutern finden kann.

Die Erfindung löst diese Aufgabe mit einem Mittel zur selektiven Unkrautbekämpfung auf Basis einer Wirkstoffkombination aus einem Carbonsäureamid und einem Phenoläther. Gemäß der Erfindung ist ein Mittel der vorgenannten Art formuliert und gekennzeichnet durch

A) ein Carbonsäureamid der allgemeinen Formel

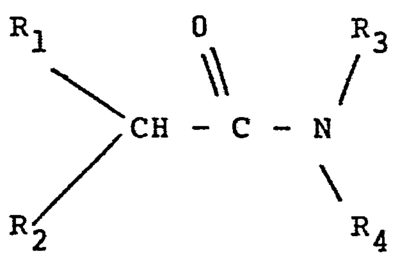

worin $R_1$ bis $R_4$ jeweils ein ggf. substituierter Phenylrest oder Alkylrest mit 1 bis 4 C-Atomen ist, und

B) einen Diphenyläther der allgemeinen Formel

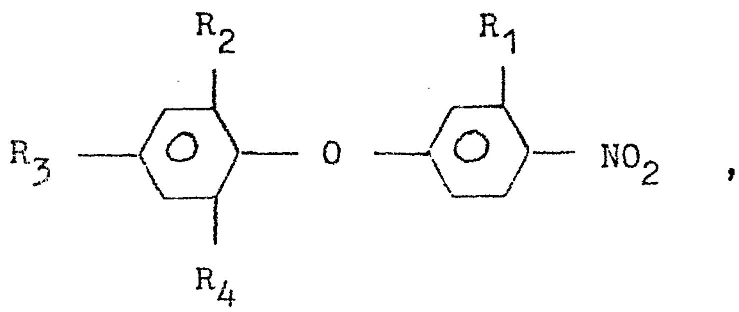

worin $R_1$ = Wasserstoff, Acetyl, $C_{1 \text{ bis } 4}$ - Alkoxy
$R_2$ = Halogen, $NO_2$
$R_3$ = Halogen, $CF_3$
$R_4$ = Wasserstoff, Halogen,
wobei im Falle von $R_2$ und $R_3$ = Halogen $R_4$ kein Wasserstoff ist.

In der allgemeinen Formel des Diphenyläthers B kann $R_1$ auch ein Alkoxyrest sein. Hierin besitzt die Alkoxygruppe einen niederen Alkylrest. Der Alkoxyrest ist im allgemeinen Methoxy, Äthoxy oder Propoxy bzw. Isopropoxy. In den Substituenten $R_2$, $R_3$ und $R_4$ des Diphenyläthers B ist das Halogen im allgemeinen Chlor, es kann aber auch Fluor sein.

Die herbizide Wirksamkeit der erfindungsgemäßen Mittel liegt in unerwarteter Weise wesentlich höher als die Summe der Wirkungen ihrer Einzelwirkstoffe, insbesondere sind sie wirksam gegen simazinresistente Poa annua und schwer bekämpfbare breitblättrige Unkräuter in Baumschulen bei hervorragender Verträglichkeit bei einer großen Zahl von Ziergehölzund Stauden-Arten. Die erfindungsgemäßen Mittel lassen sich daher mit sehr gutem Erfolg anwenden in Nutzpflanzenkulturen von Mais, Soja, Sonnenblumen, Wein, Obst, Gemüse, Kartoffeln, ferner in Staudenund Ziergehölzkulturen sowie in Baumschulverschulbeeten und Baumschulsaatbeeten.

Bevorzugte Mittel gemäß der Erfindung sind solche, die als Carbonsäureamid N,N-Dimethyl-2,2-diphenylacetamid (Diphenamid) und als Phenoläther den Wirkstoff 2-Chlor-1-(3-äthoxy-4-nitrophenoxy)-4-(trifluormethyl)-benzol (Oxyfluorfen) enthalten.

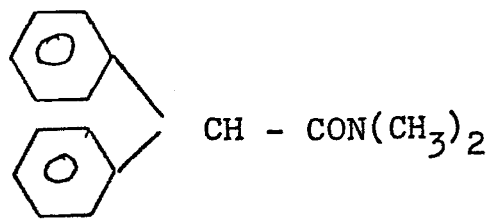 Diphenamid

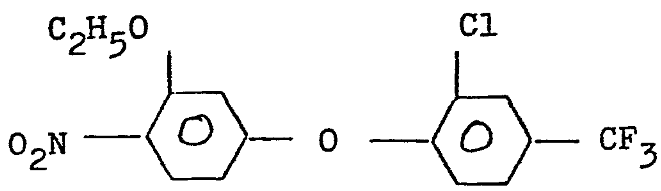 Oxyfluorfen

Die beiden Einzelwirkstoffe lassen sich innerhalb weiter Grenzen miteinander kombinieren. Bevorzugt sind jedoch Mittel, in denen die Einzelwirkstoffe Carbonsäureamid und Phenoläther in einem Gewichtsverhältnis von 12 : 1 bis 1 : 12, insbesondere aber 5 : 1 bis 1 : 5 stehen. Ein besonders geeignetes und zweckmäßiges Mittel gemäß Erfindung sieht als Carbonsäureamid das N,N-Dimethyl-2,2-Diphenylacetamid und als Diphenyläther 2-Chlor-1-(3-äthoxy-4-nitrophenoxy)-4-(trifluormethyl)-benzol in einem Mengenverhältnis von 5 : 1 vor.

Die erfindungsgemäßen Mittel können entweder als Tankmischungen, bei denen die Wirkstoffkomponenten erst unmittelbar vor der Applikation miteinander vermischt werden oder als Fertigformulierungen zur Anwendung gebracht werden. Sie können aber auch in die üblichen Formulierungen übergeführt werden, wie Spritzpulver, Emulsionen, Suspensionen, Granulate, wasserdispergierbare Granulate u. a., wobei sie dann außer der Wirkstoffkombination noch die üblichen Formulierungshilfsmittel, wie z. B. Inertstoffe, Netz-, Dispergiermittel und Emulgiermittel enthalten.

Die erfindungsgemäßen Mittel können sowohl vor als auch nach dem Auflaufen der Pflanzen appliziert werden. Die Anwendung wird vorzugweise vor dem Auflaufen der Pflanzen vorgenommen. Sie können auch vor der Saat in den Boden eingearbeitet werden.
Die angewandte Wirkstoffmenge hängt im wesentlichen von der Art des gewünschten Unkrautbekämpfungsgrades ab. Im allgemeinen liegen die aufzuwendenden Mengen zwischen 1 und 10 kg Wirkstoff bzw. Wirkstoffkombination pro Hektar, vorzugsweise zwischen 4 und 8 kg/ha.

Mit Hilfe der erfindungsgemäßen Mittel lassen sich zahlreiche Unkräuter in Nutzpflanzenkulturen, insbesondere in Kulturen von Mais, Kartoffeln und Gemüse im Direktspritzverfahren (unter Blatt der Kulturpflanze), in Baumschulsaatbeeten und Blumenzwiebeln im Vorauflaufverfahren, in Baumschulverschulbeeten, in Stauden und Ziergehölzanlagen während der Winterruhe bis zum Austrieb im Frühjahr erfolgreich bekämpfen. Mit den Mitteln gemäß vorliegender Erfindung erfolgt eine Erweiterung des Anwendungsbereiches der beschriebenen Carbonsäureamide besonders in der Bekämpfung der Unkrautarten Viola tricolor, Lamium purpureum, Galium aparine, Senecium ssp., Polygonum convolvulus, Gnaphalium uliginosum und Urtica ureus.

Die gute herbizide Wirkung der erfindungsgemäßen Mittel wird anhand des nachfolgenden Beispiels näher und beispielsweise erläutert. Während die einzelnen Wirkstoffe erhebliche Schwächen aufweisen, zeigen die erfindungsgemäßen Mittel eine Bekämpfungswirkung, die über eine einfache Wirkungssummierung hinausgeht.

Aus den Tabellen geht klar hervor, daß die gefundene herbizide Wirkung der erfindungsgemäßen Mittel bei den Unkräutern überadditiv ist, d. h. es liegt ein synergistischer Effekt vor.

Zur Berechnung eines synergistischenEffekts wurde davon ausgegangen, daß ein rein additiver Effekt sich nach folgender Formel errechnet:

$$E = X + Y - \frac{X \cdot Y}{100}$$

vergl. Colby, S. R. "Calculating synergistic and antagonistic responses of herbicide combinations", Weeds 15, 1967)

E = der (bei additiver Wirkung) zu erwartende herbizide Wirkungsgrad ( % Unkrautvernichtung) nach Anwendung der Herbizide A + B bei p + q kg Wirkstoff /ha

X = Wirkungsgrad (%) bei Anwendung des Wirkstoffes A mit p kg/ha

Y = Wirkungsgrad (%) bei Anwendung des Wirkstoffes B mit q kg/ha

Liegt der experimentell gefundene Wert über dem gemäß vorliegender Formel errechneten Wert, so liegt ein synergistischer Effekt vor.

Aus den Tabellen 1 und 2 geht hervor, daß die gefundene herbizide Wirkung der erfindungsgemäßen Mittel bei den Unkräutern größer ist als die berechnete, d. h. es liegt ein echter synergistischer Effekt vor.

Beispiel 1

Herstellung einer Wirkstoffkombination aus N,N-Dimethyl-2,2-diphenylacetamid (Diphenamid) und 2-Chlor-1-(3-äthoxy-4-nitrophenoxy)-4-(trifluormethyl)- benzol (Oxyfluorfen).

60 Gewichtsteilen Diphenamid werden 10 Gewichtsteile eines vorher vermahlenen Gemisches aus 2 Teilen Oxyfluorfen und 1 Teil Kieselsäure unter gutem Mischen zugegeben. Anschließend werden der Mischung im Mischaggregat 17 Gewichtsteile eines basischen Magnesiumaluminiumsilikats (Attaclay), 5 Gewichtsteile Dispergator (Ammoniumsalz der

Ligninsulfonsäure) und 5 Gewichtsteile eines Netzmittels sowie 3 Gewichtsteile eines Emulgierhilfsmittels zugesetzt und das Produkt in einer Mühle feinpulvrig vermahlen. Die aufzuwendende Menge pro Bodenfläche beträgt 10 kg/ha.

Für den Vorlauftest in Baumschulverschulbeeten (Tabelle 1) und in Ziergehölzen (Tabelle 2) wurden 10 kg des Pulvers in 400 Liter Wasser verrührt und anschließend verspritzt.

Die vorgenannten Versuche des Beispiels 2 (Tabelle 1) und des Beispiels 3 (Tabelle 2) sind nachfolgend zusammengestellt.

Tabelle 1: Vorauflauf Baumschulverschulbeete

| Wirkstoff | Aufwandmenge | | Unkraut (Abtötung in %) | | |
|---|---|---|---|---|---|
| | kg/ha | Wirkstoff g/ha | Poa annua | Viola tricolor | Lamium purpureum |
| Diphenamid (A) | 12 | 6000 | 90 | 10 | 0 |
| Oxyfluorfen (B) | 3 | 750 | 20 | 80 | 95 |
| A + B (erfindungsgemäß) | 10 | 6000 + 750 | 100 | 100 | 100 |

Tabelle 2: Vorauflauf Ziergehölze

| Wirkstoff | Aufwandmenge | | Unkräuter (Abtötungsquote in %) | | | |
|---|---|---|---|---|---|---|
| | kg/ha | Wirkstoff g/ha | Gnaphalium uliginosum | Galium aparine | Viola tricolor | Festuca pratensis |
| Diphenamid (A) | 12 | 6000 | 10 | 20 | 40 | 80 |
| Oxyfluorfen (B) | 3 | 750 | 80 | 60 | 50 | 10 |
| A + B (erfindungsgem.) | 10 | 6000 +750 | 100 | 98 | 100 | 100 |

## Patentansprüche

0097990

1) Mittel zur selektiven Unkrautbekämpfung, auf Basis einer Wirkstoffkombination aus Carbonsäureamid und Phenoläther, gekennzeichnet durch

A) ein Carbonsäureamid der allgemeinen Formel

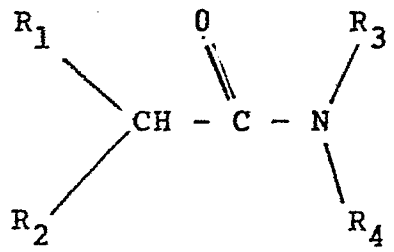

worin $R_1$ bis $R_4$ jeweils ein ggf. substituierter Phenylrest oder Alkylrest mit 1 bis 4 C-Atomen ist, und

B) einen Diphenyläther der allgemeinen Formel

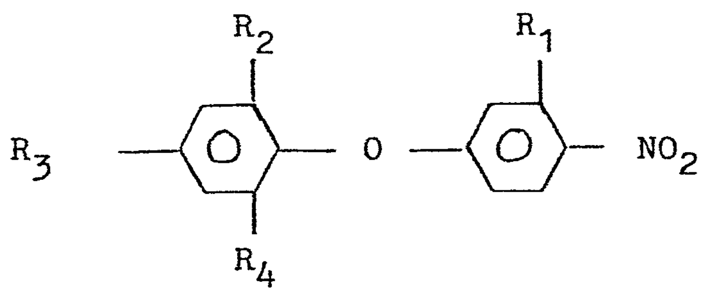

worin $R_1$ = Wasserstoff, Acetyl, $C_{1\ bis\ 4}$ - Alkoxy
$R_2$ = Halogen, $NO_2$
$R_3$ = Halogen, $CF_3$
$R_4$ = Wasserstoff, Halogen,
wobei im Falle von $R_2$ und $R_3$ = Halogen $R_4$ kein Wasserstoff ist.

2) Mittel nach Anspruch 1, dadurch gekennzeichnet, daß das Carbonsäureamid N,N-Dimethyl-2,2-diphenylacetamid (Diphenamid) ist.

3) Mittel nach den Ansprüchen 1 bis 2, dadurch gekennzeichnet, daß der Diphenyläther 2-Chlor-1-(3-äthoxy-4--nitrophenoxy)-4-(trifluormethyl)-benzol (Oxyfluorfen) ist.

4) Mittel nach den Ansprüchen 1 bis 3, dadurch gekennzeichnet, daß die Einzelwirkstoffe Carbonsäureamid und Diphenyläther in einem Gewichtsverhältnis von 12 : 1 bis 1 : 12, vorzugsweise 5:1 bis 1 : 5 stehen.

5) Mittel nach den Ansprüchen 1 bis 4, dadurch gekennzeichnet, daß die Wirkstoffe Diphenamid und Oxyfluorfen in einem Gewichtsverhältnis von 5 : 1 stehen.

Europäisches Patentamt

**0097990**

Nummer der Anmeldung

# EUROPÄISCHER RECHERCHENBERICHT

EP 83 20 0875

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-2 002 636 (A.H. MARKS & CO.) * Ansprüche 1-3,7 * | 1,4 | A 01 N 37/22<br>A 01 N 37/18 //<br>(A 01 N 37/22<br>A 01 N 33/22<br>A 01 N 37/18<br>A 01 N 33/22 ) |
| A | FR-A-2 206 906 (MOBIL OIL CORP.) * Insgesamt * | 1,4 | |
| A | GB-A-1 448 950 (ROHM & HAAS) * Ansprüche 1,2 * | 1,4 | |
| A | GB-A-1 164 235 (THE UPJOHN CY.) * Ansprüche 1,2,6 * | 1,2,4 | |
| A | CHEMICAL ABSTRACTS, Band 87, Nr. 23, 5. Dezember 1977, Seite 157, Nr. 178925q, Columbus, Ohio, USA D.B. SOUTH: "Pre- and postemergent weed control in forest nurseries" & PROC., SOUTH. WEED SCI. SOC. 1977, 30, 269-78 * Insgesamt * | 1,3 | RECHERCHIERTE SACHGEBIETE (Int. Cl. 3)<br>A 01 N |

Der vorliegende Recherchenbericht wurde für alle Patentansprüche erstellt.

| Recherchenort | Abschlußdatum der Recherche | Prüfer |
|---|---|---|
| DEN HAAG | 23-09-1983 | FLETCHER A.S. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument